# EUROPÄISCHE PATENTSCHRIFT

(11) **EP 3 247 657 B1**
(45) Veröffentlichungstag und Bekanntmachung des Hinweises auf die Patenterteilung: **26.02.2020**
(21) Anmeldenummer: 16705706.6
(22) Anmeldetag: 20.01.2016
(51) Int. Cl.: B65G 27/04, B65G 47/256, B65G 47/51, B65G 47/14

(54) **FERTIGUNGSANLAGE**
COMPONENT PREPARATION DEVICE
DISPOSITIF DE FOURNITURE DE PIÈCES

(30) Priorität: 20.01.2015 AT 500342015
(43) Veröffentlichungstag der Anmeldung: 29.11.2017
(73) Patentinhaber: STIWA Holding GmbH, 4800 Attnang-Puchheim (AT)
(72) Erfinder: KRITZINGER, Johann, 4873 Frankenburg (AT)
(74) Vertreter: Burger, Hannes
(86) Internationale Anmeldenummer: PCT/AT2016/050008
(87) Internationale Veröffentlichungsnummer: WO 2016/115584

(56) Entgegenhaltungen:
- WO-A1-2012/167846
- AT-B- 341 426
- CN-A- 103 496 567
- DE-A1- 10 133 805
- DE-A1-102004 012 133
- JP-A- S5 772 512
- JP-A- H09 150 931
- JP-A- H10 202 569
- JP-A- S59 212 315
- JP-A- 2010 228 819
- JP-U- H0 537 744
- US-A1- 2005 199 470
- US-A1- 2011 284 344

## Beschreibung

Die Erfindung betrifft eine Fertigungsanlage zur Fertigung von Baugruppen aus einzelnen Bauteilen gemäß dem Oberbegriff des Anspruch 1 und ein Verfahren zum Bereitstellen und Entnehmen von Bauteilen in einer Fertigungsanlage.

Die AT341426B offenbart eine Vorrichtung nach dem Oberbegriff des Anspruchs 1, zum gerichteten, einzelnen Zuführen von Teilen, insbesondere Montageteilen zu Entnahmestationen. Dabei sind zwei oder mehrere Linearförderer etwa horizontal hintereinander angeordnet. In den Förderern oder an Übergabestationen zu folgenden Förderern sind Abscheider, wie Schikanen, Balancierstäbe, Abweiser od. dgl. Bzw. mit den Förderern zusammenwirkende Leiteinrichtungen, wie Leitflächen, Blasdüsen od. dgl. Zur Ausrichtung bzw. Vereinzelung der geförderten Teile vorgesehen.

Die JPS5772512A offenbart eine Fördervorrichtung zum Fördern von Teilen mit einer Vibrationseinrichtung. Dabei sind mehrere Förderbahnen parallel nebeneinander angeordnet, wobei einer der gerade verlaufenden Förderer länger ist als ein anderer.

Die EP2393739B1 (bzw. US2011284344A1) offenbart ein System zur Versorgung mit Bauelementen, das eine Vibrationsvorrichtung umfasst. Bauelemente werden mittels eines Roboters von einer Platte als Aufnahmefläche entnommen. Ein oberhalb der Platte angeordnetes Visualisierungssystem ist ausgebildet, um die Position der Bauelemente auf der Platte der Vibrationseinrichtung zu erfassen und um die Vibrationsvorrichtung und den Roboter in Abhängigkeit von der Verteilung und von der Ausrichtung der Bauelemente zu betätigen.

Nachteile einer derartigen Vorrichtung bestehen darin, dass die Entnahme durch den Roboter bei überschüssigen Bauelementen auf der Platte zu Problemen führt. Auch wird für falsch orientierte Bauteilen auf der Platte keine Lösung bereitgestellt, was mit diesen Bauelementen zu geschehen hat bzw. wie diese verwertet werden können. Ein weiterer Nachteil ergibt sich daraus, dass sich der Roboterarm bzw. der Greifer während des Entnahmevorganges zwischen der Platte und der Kamera befindet, wodurch die Zuverlässigkeit der Bauelemente-Detektion negativ beeinflusst wird. Die Taktzeiten sind nicht zuletzt aufgrund dieser Konstellation verhältnismäßig lang.

Das Ziel der Erfindung besteht insbesondere darin, Nachteile aus dem Stand der Technik zu beseitigen und eine Fertigungsanlage umfassend eine Bauteil-Bereitstellungsvorrichtung zu schaffen, mit der die Effizienz und/oder die Zuverlässigkeit der Bauteile-Bereitstellung erhöht werden. In Bezug auf überschüssige oder falsch orientierte Bauteile auf der Bereitstellungsplattform soll bevorzugt eine Lösung bereitgestellt werden, mit der solche Bauteile optimal verwertet werden können. Eine weitere Aufgabe besteht darin, die Zuverlässigkeit der Detektion der Bauteile auf der Bereitstellungsplattform zu erhöhen, und somit die Prozesseffizienz zu steigern. Eine weitere Aufgabe besteht darin, die Taktzeiten im Hinblick auf Bereitstellung und Entnahme der Bauteile auf der Bereitstellungsplattform zu erhöhen.

Eine Aufgabe der Erfindung wird mit einer eingangs genannten Fertigungsanlage durch die kennzeichnenden Merkmale des Anspruch 1 gelöst.

Überschüssige und/oder falsch orientierte Bauteile können über die Rückführeinrichtung auf elegante Weise dem Prozess wieder zugeführt werden. Die Bereitstellungsplattform kann von überschüssigen Bauteilen freigehalten werden, indem diese z.B. durch einen Schwingförderhub, in die bzw. zu der Rückführeinrichtung gefördert werden. Bevorzugt wird für jeden Entnahmevorgang mittels einer Handhabungseinrichtung nur ein einziges Bauteil auf der Bereitstellungsplattform bereitgestellt. Die Bereitstellungsplattform kann Teil der Zuführeinrichtung sein oder als von der Zuführeinrichtung losgelöste Komponente gebildet sein. Die Rückführung jener Bauteile, die auf der Bereitstellungsplattform gerade nicht benötigt werden, erfolgt dabei automatisch. Die Zuführeinrichtung und die Rückführeinrichtung werden durch einen Förderantrieb, vorzugsweise einen Schwingförderantrieb, angetrieben. Dabei können die Zuführeinrichtung und die Rückführeinrichtung jeweils einen eigenen Förderantrieb umfassen oder von einem gemeinsamen Förderantrieb angetrieben sein.

Ein weiterer Vorteil besteht darin, dass Staub und Schmutzpartikeln aus dem Bereich der Bereitstellungsplattform in die Rückführeinrichtung gelangen und durch diese abgeführt werden. Eine Verschmutzung der Bereitstellungsplattform kann dadurch hintangehalten werden.

Die Bauteile sind vorgefertigt und können jeglicher Art sein, z.B. Schrauben, Muttern, Beilagscheiben, elektronische Komponenten, mechanische Komponenten, wie Federn, Klammern, Plättchen, Konstruktionsteile, etc. Bevorzugt sind die Bauteile Kleinteile, vorzugsweise nicht größer als 5cm³.

Die Fläche der Bereitstellungsplattform beträgt vorzugsweise höchstens 30cm², vorzugsweise höchstens 15cm². Die Ausführungsform eignet sich besonders für die Bereitstellung von Kleinteilen.

Eine bevorzugte Ausführungsform zeichnet sich dadurch aus, dass im Bereich der Bereitstellungsplattform ein Überlauf ausgebildet ist, der in die Rückführeinrichtung mündet. Der Übergang der Bauteile in die Rückführeinrichtung kann auf diese Weise besonders einfach und zuverlässig erfolgen. Die Gefahr einer Bauteile-Anstauung auf der Bereitstellungsplattform wird dadurch vermieden.

Eine bevorzugte Ausführungsform zeichnet sich dadurch aus, dass die Zuführeinrichtung und/oder die Rückführeinrichtung eine Hochfördereinrichtung zum Fördern der Bauteile von einem niedrigeren auf ein höheres Niveau umfasst, wobei vorzugsweise die Hochfördereinrichtung eine archimedische Schraube oder einen Schwingförderer mit spiralförmig nach oben verlaufendem Förderpfad umfasst. Aufgrund dieser Maßnahme kann die Zuführeinrichtung und/oder die Rückführeinrichtung - jeweils in Förderrichtung gesehen - eine Neigung (nach unten) oder sogar eine Fallstrecke aufweisen, wodurch der Bauteiletransport, insbesondere im Zusammenhang mit einem Schwingförderer, zuverlässiger wird. Insbesondere durch die Rückführeinrichtung, in deren Förderverlauf es zunächst nicht so sehr um die Orientierung der Bauteile ankommt, können dabei die Bauteile von einem höheren Niveau auf ein tieferes Niveau gelangen. Die Hochfördereinrichtung, die nun Teil der Zuführeinrichtung oder (noch) der Rückführeinrichtung sein kann, bringt die Bauteile wieder auf ein höheres Niveau. Auf diese Weise wird ein Kreislauf geschaffen, bei dem die Gefahr von unerwünschten Bauteile-Ansammlungen oder Verstopfungen minimiert ist.

Bevorzugt ist die Hochfördereinrichtung eine archimedische Schraube, die als Teil der Rückführeinrichtung in die Bahn der Zuführeinrichtung einmündet.

Eine bevorzugte Ausführungsform zeichnet sich dadurch aus, dass die Zuführeinrichtung zumindest einen Schwingförderer mit einer im Wesentlichen gerade verlaufenden Bahn und einem mit der Bahn gekoppelten Schwingförderantrieb umfasst. Mit dieser Maßnahme können die Bauteile nicht nur vereinzelt werden, sondern kann durch entsprechende Abfolge von Schwingförderhüben die Dosierung der auf die Bereitstellungsplattform gelangenden Bauteile besonders genau kontrolliert werden. Die Bahn kann z.B. durch eine Rinne, eine Rutsche, ein Rohr, einen Schlauch, eine Schiene, etc., gebildet sein.

In einer bevorzugten Variante mündet die Rückführeinrichtung spätestens in den Anfangsbereich der Bahn der Zuführeinrichtung.

Ein Schwingförderer kann z.B. derart ausgebildet sein, dass er die Bahn in eine Richtung bewegt, die sich aus einer Komponente in Förderrichtung und einer Komponente senkrecht dazu zusammensetzt. Bei der Rückwärtsbewegung der Bahn bleibt das Fördergut aufgrund der Massenträgheit 'stehen'. Die Schwingförderhübe können kontinuierlich oder intermittierend (d.h. mit Pausen dazwischen) geregelt sein. Die Aufhängung der Bahn erfolgt meist über Federn. Schwingförderer sind im Stand der Technik bekannt, z.B. aus der US2011284344A1, deren Offenbarung durch Bezugnahme zur Gänze in diese Beschreibung aufgenommen wird.

Eine bevorzugte Ausführungsform zeichnet sich dadurch aus, dass die Bahn der Zuführeinrichtung Schikanen, insbesondere Vertiefungen, Übergangsspalte, Erhebungen oder Hindernisse, umfasst, denen die Bauteile während des Zuführvorganges ausgesetzt sind. Neben dem Vereinzelungseffekt kann so auch eine bevorzugte Orientierung der Bauteile während des Förderns und schließlich auch auf der Bereitstellungsplattform erreicht werden.

Eine bevorzugte Ausführungsform zeichnet sich dadurch aus, dass entlang der Förderrichtung der Zuführeinrichtung zumindest eine Bauteil-Sensoreinrichtung, insbesondere eine Lichtschranke, zur Detektion der geförderten Bauteile angeordnet ist. Dies erlaubt die Überwachung des Bauteile-Flusses und eine entsprechende (Nach-)Regelung des Förderantriebes der Zuführeinrichtung. So können bei temporär nicht vorhandenen oder nur wenigen Bauteilen die Anzahl der Schwingförderhübe erhöht werden; dementsprechend können bei erhöhter Bauteiledichte entlang der Förderrichtung können die Schwingförderhübe reduziert oder verkürzt werden. In dieser Ausführungsform ist die Bauteil-Sensoreinrichtung mit der Steuereinrichtung der Bauteile-Bereitstellungsvorrichtung verbunden, die wiederum - in Abhängigkeit der Sensordaten - auf den Förderantrieb der Zuführeinrichtung einwirkt.

Eine bevorzugte Ausführungsform zeichnet sich dadurch aus, dass die Rückführeinrichtung eine im Wesentlichen gerade verlaufende Bahn umfasst, die vorzugsweise mit demselben Schwingförderantrieb gekoppelt ist wie die Bahn der Zuführeinrichtung. Dies ermöglicht eine einfache und platzsparende Konstruktion.

Eine bevorzugte Ausführungsform zeichnet sich dadurch aus, dass die Bahn der Rückführeinrichtung stärker (nach unten) geneigt ist als die Bahn der Zuführeinrichtung. Insbesondere im Falle eines gemeinsamen Schwingförderantriebes, der vorteilhafterweise auf eine optimale Zuführung ausgerichtet ist, sorgt die stärkere Neigung der Rückführeinrichtung nach unten, dass trotz Schwingförderhübe in die Zuführ-Förderrichtung die Bauteile auf der Bahn der Rückführeinrichtung in die entgegengesetzte Rückführ-Förderrichtung gefördert werden.

Eine bevorzugte Ausführungsform zeichnet sich dadurch aus, dass die Rückführeinrichtung eine Fallstrecke umfasst, die im Bereich der Bereitstellungsplattform beginnt. Dies ermöglicht ein besonders schnelles und zuverlässiges Entfernen der nicht benötigten bzw. falsch orientierten Bauteile aus dem Bereich der Bereitstellungsplattform, wodurch unerwünschte Bauteilansammlungen vermieden werden

Eine bevorzugte Ausführungsform zeichnet sich dadurch aus, dass die Zuführeinrichtung ein Bauteile-Zwischenreservoir umfasst und die Rückführeinrichtung in das Bauteile-Zwischenreservoir mündet. Dort gelangen die rückgeführten Bauteile mit gegebenenfalls frisch zugeführten neuen Bauteilen zusammen und werden anschließend durch die Zuführeinrichtung in Richtung Bereitstellungsplattform gefördert.

Eine bevorzugte Ausführungsform zeichnet sich dadurch aus, dass eine Hochfördereinrichtung der Zuführeinrichtung von dem Bauteile-Zwischenreservoir ausgeht. Es können somit neue, z.B. aus einem Bauteile-Hauptreservoir stammende und in das Zwischenreservoir gebrachte Bauteile zusammen mit rückgeführten Bauteilen gemeinsam, d.h. durch einen einzigen Mechanismus, auf ein höheres Niveau gebracht werden.

Eine bevorzugte Ausführungsform zeichnet sich dadurch aus, dass die Bereitstellungsplattform im Endbereich der Bahn der Zuführeinrichtung ausgebildet ist. Dadurch ergibt sich eine effiziente, kompakte und platzsparende Konstruktion.

Eine bevorzugte Ausführungsform zeichnet sich dadurch aus, dass die Bereitstellungsplattform ein Teil der Zuführeinrichtung ist, vorzugsweise in der Bahn der Zuführeinrichtung integriert ist. Dies stellt eine besonders elegante Lösung dar, da die Bauteile, die entlang der Bahn gefördert werden, ohne weitere Änderung Ihrer Orientierung direkt auf die Bereitstellungsplattform, die z.B. durch ein eingelegtes (vorzugsweise durchsichtiges) Plättchen gebildet wird oder nur durch eine vorgegebene Fläche der Bahn definiert wird, gelangen. Bevorzugt ist der Schwingförderantrieb inaktiv, während ein Bauteil von einer Handhabungseinrichtung von der Bereitstellungsplattform entnommen wird. Im Falle eines Schwingförderantriebes wird mit der Bahn auch die Bereitstellungsplattform in Bewegung versetzt. Bei überschüssigen oder falsch orientierten Bauteilen auf der Bereitstellungsplattform können diese durch Betätigung des Schwingförderantriebes von der Bereitstellungsplattform entfernt werden, z.B. in Richtung eines Überlaufs, der in die Rückführeinrichtung mündet.

Eine Ausführungsform ist dadurch gekennzeichnet, dass die Bereitstellungsplattform zumindest teilweise durchsichtig ausgebildet ist und die Bauteile-Bereitstellungsvorrichtung eine optische Sensoreinrichtung, insbesondere eine Kamera, umfasst, die unterhalb der Bereitstellungsplattform angeordnet ist, wodurch auf der Bereitstellungsplattform liegende Bauteile mittels der Sensoreinrichtung von unten detektierbar sind.

Durch diese Maßnahme wird gewährleistet, dass sich die optische Sensoreinrichtung und die von oben auf die Plattform zufahrende Handhabungseinrichtung (z.B. einer Fertigungsanlage) zur Entnahme der Bauteile nicht gegenseitig stören bzw. negativ beeinflussen. Durch die Handhabungseinrichtung ist grundsätzlich die Sicht von oben auf die Bereitstellungsplattform - zumindest während der Entnahme der Bauteile - gestört, sodass bei einer Detektion der Bauteile von oben regelmäßig Detektionsfehler zu erwarten sind. Außerdem ist der Platz oberhalb der Bereitstellungsplattform beschränkt. Die Erfindung löst diese Nachteile dadurch, dass die Detektion der Bauteile von unten durch eine durchsichtige Bereitstellungsplattform erfolgt. Die Detektionszuverlässigkeit ist daher unabhängig von der Handhabungseinrichtung. Mit der oben vorgeschlagenen Maßnahme wird die Bereitstellung und Entnahme der Bauteile zuverlässiger, wodurch sich eine wesentliche Prozessoptimierung ergibt. Die Bereitstellungsplattform kann z.B. durch eine Glasplatte, eine Plexiglasplatte oder eine durchsichtige Kunststoffplatte gebildet sein.

Erfindungsgemäß umfasst die Bauteile-Bereitstellungsvorrichtung eine erste Zuführeinrichtung zum Zuführen der Bauteile zu einer Bereitstellungsplattform, die der ersten Zuführeinrichtung zugeordnet ist, und eine zweite Zuführeinrichtung zum Zuführen der Bauteile zu einer Bereitstellungsplattform, die der zweiten Zuführeinrichtung zugeordnet ist, wobei die Zuführeinrichtungen im Wesentlichen dieselbe Förderrichtung aufweisen. Diese Maßnahme erlaubt das parallele Zuführen von gleichen oder verschiedenen Bauteilen.

Die Bereitstellungsplattformen der beiden Zuführeinrichtungen liegen erfindungsgemäß dabei nebeneinander, vorzugsweise unmittelbar nebeneinander, sodass sie von derselben Handhabungseinrichtung angefahren werden können. Da der Schwingförderantrieb einer Zuführeinrichtung während des Entnahmevorganges von der zugehörigen Bereitstellungsplattform ruht bzw. still steht, sorgt das Vorsehen einer zweiten Zuführeinrichtung zu einer wesentlichen Verkürzung der Taktzeiten. Die Zuführeinrichtungen werden jeweils intermittierend betätigt: während eine Zuführeinrichtung still steht, wird die andere betätigt, und umgekehrt. Während also ein Bauteil von der einen Bereitstellungsplattform entnommen wird, wird parallel dazu ein Bauteil auf der anderen Bereitstellungsplattform bereitgestellt. Der Entnahmevorgang kann dabei jeweils auch die Detektion des zu entnehmenden Bauteils umfassen. Es steht somit für die Handhabungseinrichtung (Entnahmeeinrichtung, z.B. in Form eines Greifers) immer ein Bauteil bereit: es bestehen daher keine Wartezeiten für die Handhabungseinrichtung.

Erfindungsgemäß umfassen die Zuführeinrichtungen jeweils einen Schwingförderer mit einer im Wesentlichen gerade verlaufenden Bahn und einen mit der Bahn gekoppelten Schwingförderantrieb, wobei die Bahnen der Zuführeinrichtungen nebeneinander verlaufen. Dies ermöglicht eine platzsparende und kostengünstige Lösung, wobei auch die Bereitstellungsplattformen möglichst nebeneinander angeordnet sind.

Erfindungsgemäß weisen die Zuführeinrichtungen jeweils eine Rückführeinrichtung auf, die vom Bereich der jeweiligen Bereitstellungsplattform ausgeht und in die zugehörige Zuführeinrichtung einmündet, wobei vorzugsweise die Bahnen der Zuführeinrichtungen zwischen den Rückführeinrichtungen angeordnet sind. So können die Zuführeinrichtung und insbesondere die in ihrem Endbereich angeordneten Bereitstellungsplattformen möglichst nebeneinander angeordnet sein.

Die Bereitstellungsvorrichtung kann ein oder mehrere Bauteile-Reservoirs (auch Bunker genannt) umfassen. Bevorzugt ist das zumindest eine Bauteile-Reservoir (z.B. nach dessen Entleerung durch den Bereitstellungsprozess) als Ganzes von der Bereitstellungsvorrichtung abnehmbar und durch ein anderes (gefülltes) Bauteile-Reservoir austauschbar.

Eine bevorzugte Ausführungsform zeichnet sich dadurch aus, dass die Bauteile-Bereitstellungsvorrichtung als Einschubmodul für eine modulartig aufgebaute Fertigungsanlage ausgebildet ist. Dies ermöglicht schnellen Einbau, Wartung und Austausch. Das Einschubmodul umfasst eine Basis, z.B. einen Rahmen, eine Plattform oder ein Gerüst, die die Zuführeinrichtung bzw. die Bereitstellungsplattform, sowie gegebenenfalls die Rückführeinrichtung und Bauteile-Reservoir(s) trägt. An der Basis sind Befestigungseinrichtungen ausgebildet, um das Einschubmodul mit einem Lagerrahmen einer Fertigungsanlage zu befestigen.

Eine bevorzugte Ausführungsform zeichnet sich dadurch aus, dass das Einschubmodul eine längliche Form aufweist und dass die Bereitstellungsplattform im Bereich des vorderen Modulendes ist und ein Bauteile-Reservoir im Bereich des hinteren Modulendes angeordnet ist. Das Bestücken der Bereitstellungsvorrichtung mit neuen Bauteilen wird dadurch erleichtert. Außerdem sind die (üblicherweise einem Sicherheitsbereich zugeordnete) Bereitstellungsplattform und das Bauteile-Reservoir räumlich getrennt. Der Bereitstellungs- und Entnahmevorgang müssen während des Nachfüllens auch nicht unterbrochen werden.

Die Fertigungsanlage zur Fertigung von Baugruppen aus einzelnen Bauteilen umfasst: eine Steuereinrichtung, zumindest eine Bauteile-Bereitstellungsvorrichtung nach einer der vorhergehenden Ausführungsformen und zumindest eine Handhabungseinrichtung, insbesondere eine Greifereinrichtung, zur Entnahme der Bauteile von der Bereitstellungsplattform. Die Baugruppen können dabei z.B. mechanische und/oder elektrische Baugruppen sein.

Die Fertigungsanlage kann eine Transporteinrichtung und mehrere Arbeitsstationen umfassen. Die Transporteinrichtung ist dazu ausgebildet, um eine entstehende Baugruppe von einer Arbeitsstation zu zumindest einer anderen Arbeitsstation zu transportieren. Dabei wird eine der Arbeitsstationen durch eine erfindungsgemäße Bauteile-Bereitstellungsvorrichtung gebildet.

Eine bevorzugte Ausführungsform zeichnet sich dadurch aus, dass die Bauteile-Bereitstellungsvorrichtung eine erste Zuführeinrichtung zum Zuführen der Bauteile zu einer Bereitstellungsplattform, die der ersten Zuführeinrichtung zugeordnet ist, und eine zweite Zuführeinrichtung zum Zuführen der Bauteile zu einer Bereitstellungsplattform, die der zweiten Zuführeinrichtung zugeordnet ist, umfasst, und dass die Handhabungseinrichtung zumindest zwei Untereinheiten umfasst, wobei eine Untereinheit der Bereitstellungsplattform der ersten Zuführeinrichtung zugeordnet ist und die andere Untereinheit der Bereitstellungsplattform der zweiten Zuführeinrichtung zugeordnet ist, wobei vorzugsweise die Untereinheiten der Handhabungseinrichtung unabhängig voneinander betätigbar sind. Dadurch können die Taktzeiten weiter verkürzt werden, da jeder Bereitstellungsplattform eine Untereinheit der Handhabungseinrichtung zugeordnet ist. Diese Variante eignet sich besonders gut dazu, wenn durch die erste und zweite Zuführeinrichtung verschiedene Bauteiltypen gefördert bzw. bereitgestellt werden. So könnten in einem einzigen Vorgang zwei unterschiedliche Bauteile entnommen werden.

Das Ziel wird auch mit einem Verfahren nach Anspruch 12, zum Bereitstellen und Entnehmen von Bauteilen in einer Fertigungsanlage, insbesondere nach einer der vorhergehenden Ausführungsformen, gelöst, wobei das Verfahren durch folgende Schritte gekennzeichnet ist:
- Bereitstellung zumindest eines Bauteiles auf einer Bereitstellungsplattform mittels einer Bauteile-Bereitstellungsvorrichtung nach einer der vorhergehenden Ausführungsformen;
- vorzugsweise Detektion des zumindest einen Bauteils auf der Bereitstellungsplattform mittels einer Sensoreinrichtung;
- Entnahme des zumindest einen Bauteiles von der Bereitstellungsplattform mittels einer Handhabungseinrichtung, insbesondere einer Greifereinrichtung.

Eine bevorzugte Ausführungsform des Verfahrens zeichnet sich dadurch aus, dass der Förderantrieb der Zuführeinrichtung während der Entnahme des zumindest einen Bauteiles von der ihr zugeordneten Bereitstellungsplattform und gegebenenfalls während der Detektion des zumindest einen Bauteils auf der ihr zugeordneten Bereitstellungsplattform still steht. Die Entnahme und gegebenenfalls die vorhergehende Detektion des Bauteils werden dadurch besonders zuverlässig.

Ein bevorzugte Ausführungsform des Verfahrens, bei dem die Bauteil-Bereitstellungsvorrichtung eine erste Zuführeinrichtung zum Zuführen der Bauteile zu einer Bereitstellungsplattform, die der ersten Zuführeinrichtung zugeordnet ist, und eine zweite Zuführeinrichtung zum Zuführen der Bauteile zu einer Bereitstellungsplattform, die der zweiten Zuführeinrichtung zugeordnet ist, umfasst, ist durch folgende Schritte gekennzeichnet:
a) mittels der ersten Zuführeinrichtung: Fördern von zumindest einem Bauteil auf die Bereitstellungsplattform, die der ersten Zuführeinrichtung zugeordnet ist;
b) Detektion des zumindest einen Bauteils auf der Bereitstellungsplattform, die der ersten Zuführeinrichtung zugeordnet ist, mittels einer Sensoreinrichtung, insbesondere hinsichtlich seiner Lage und/oder Orientierung;
c) Entnahme des zumindest einen Bauteils von der Bereitstellungsplattform, die der ersten Zuführeinrichtung zugeordnet ist, mittels der Handhabungseinrichtung;
d) mittels der zweiten Zuführeinrichtung: Fördern von zumindest einem Bauteil auf die Bereitstellungsplattform, die der zweiten Zuführeinrichtung zugeordnet ist;
e) Detektion des zumindest einen Bauteils auf der Bereitstellungsplattform, die der zweiten Zuführeinrichtung zugeordnet ist, mittels einer Sensoreinrichtung, insbesondere hinsichtlich seiner Lage und/oder Orientierung;
f) Entnahme des zumindest einen Bauteils von der Bereitstellungsplattform, die der zweiten Zuführeinrichtung zugeordnet ist, mittels der Handhabungseinrichtung;
wobei die Abfolge der Schritte a) bis c) mit der Abfolge der Schritte d) bis f) zeitlich überlappt, und wobei vorzugsweise die Schritte a) bis f) wiederholt werden.

Diese Ausführungsform ermöglicht eine wesentliche Verkürzung der Taktzeiten, da für die Handhabungseinrichtung keine Wartezeiten entstehen. Die Bereitstellungsplattformen, die der ersten und zweiten Zuführeinrichtung zugeordnet sind, sind dabei nebeneinander, vorzugsweise in unmittelbarer Nähe zueinander angeordnet. Vorzugsweise beträgt der Abstand der beiden Bereitstellungsplattformen weniger als 10cm, besonders bevorzugt weniger als 5cm.

Eine bevorzugte Ausführungsform zeichnet sich dadurch aus, dass der Förderantrieb der ersten Zuführeinrichtung während der Schritte b) und c) still steht und der Förderantrieb der zweiten Zuführeinrichtung während der Schritte e) und f) still steht, wobei vorzugsweise die Zuführeinrichtungen jeweils einen Schwingförderer mit einer im Wesentlichen gerade verlaufenden Bahn und einem mit der Bahn gekoppelten Schwingförderantrieb umfassen. Dies stellt eine besonders vorteilhafte Variante dar, da bei einem Schwingförderantrieb die Schwingförderhübe genau geregelt bzw. dosiert werden können.

Eine bevorzugte Ausführungsform zeichnet sich dadurch aus, dass die Schritte a) bis c) und die Schritte d) bis f) dieselbe Art von Bauteilen betreffen. Wie bereits erwähnt können die Taktzeiten bei der Bereitstellung, der Entnahme und folglich auch Weiterverarbeitung eines Bauteiltyps wesentlich verkürzt werden.

Eine bevorzugte Ausführungsform zeichnet sich dadurch aus, dass die Zuführeinrichtung(en) derart gesteuert wird/werden, dass während eines Zuführvorganges nur ein Bauteil auf die der jeweiligen Zuführeinrichtung zugeordneten Bereitstellungsplattform gelangt. Der Entnahmevorgang, der auch eine vorhergehende Detektion des Bauteils umfassen kann, wird dadurch besonders zuverlässig.

Eine bevorzugte Ausführungsform zeichnet sich dadurch aus, dass die Bereitstellungsplattform durchsichtig ausgebildet ist und die Bauteile auf der Bereitstellungsplattform mittels einer optischen Sensoreinrichtung von unten detektiert werden.

Eine bevorzugte Ausführungsform zeichnet sich dadurch aus, dass die Handhabungseinrichtung von der Steuereinrichtung in Abhängigkeit einer Sensoreinrichtung gesteuert wird, die Bauteile auf der Bereitstellungsplattform detektiert. Die Handhabungseinrichtung, z.B. ein Greifer, kann exakt die Position des Bauteils anfahren, wodurch die Erfolgsquote des Entnahmevorganges maximiert wird. Außerdem können (für den weiteren Fertigungsprozess) falsch orientierte Bauteile erkannt werden; solche werden von der Handhabungseinrichtung nicht aufgegriffen.

Eine bevorzugte Ausführungsform zeichnet sich dadurch aus, dass die Rückführeinrichtung eine Hochfördereinrichtung umfasst, die in Abhängigkeit von zumindest einer Bauteil-Sensoreinrichtung, die die geförderten Bauteile in der Zuführeinrichtung detektiert, gesteuert wird. Dadurch kann die Rückführung in Abhängigkeit des Bauteilebedarfs in der Zuführeinrichtung gesteuert werden, sodass der gewünschte Bauteile-Durchsatz geregelt werden kann.

Eine bevorzugte Ausführungsform zeichnet sich dadurch aus, dass überschüssige Bauteile und/oder Bauteile, die auf der Bereitstellungsplattform nicht in der für die Entnahme erforderlichen Lage orientiert sind, durch Betätigung der Zuführeinrichtung, insbesondere durch Betätigung des Schwingförderantriebes in die Rückführeinrichtung gebracht werden.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Ausführungsform einer Bauteile-Bereitstellungsvorrichtung;
- Fig. 2: ein vergrößerter Ausschnitt der Bereitstellungsvorrichtung aus Fig. 1 mit einer Handhabungseinrichtung und einer entstehenden Baugruppe;
- Fig. 3: ein vergrößerter Ausschnitt der Bereitstellungsvorrichtung aus Fig. 1 mit einer alternativ ausgebildeten Handhabungseinrichtung und einer entstehenden Baugruppe;
- Fig. 4: eine Variante der Bauteile-Bereitstellungsvorrichtung;
- Fig. 5: eine Bauteile-Bereitstellungsvorrichtung in schematischer Darstellung;
- Fig. 6: eine Fertigungsanlage in schematischer Darstellung;
- Fig. 7: die Abfolge von Verfahrensschritten einer Ausführungsform eines erfindungsgemäßen Verfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten der Erfindung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Bereitstellungsvorrichtung bzw. der Fertigungsanlage diese bzw. deren Bestandteile teilweise unmaßstäblich und/oder vergrößert und/oder verkleinert dargestellt wurden.

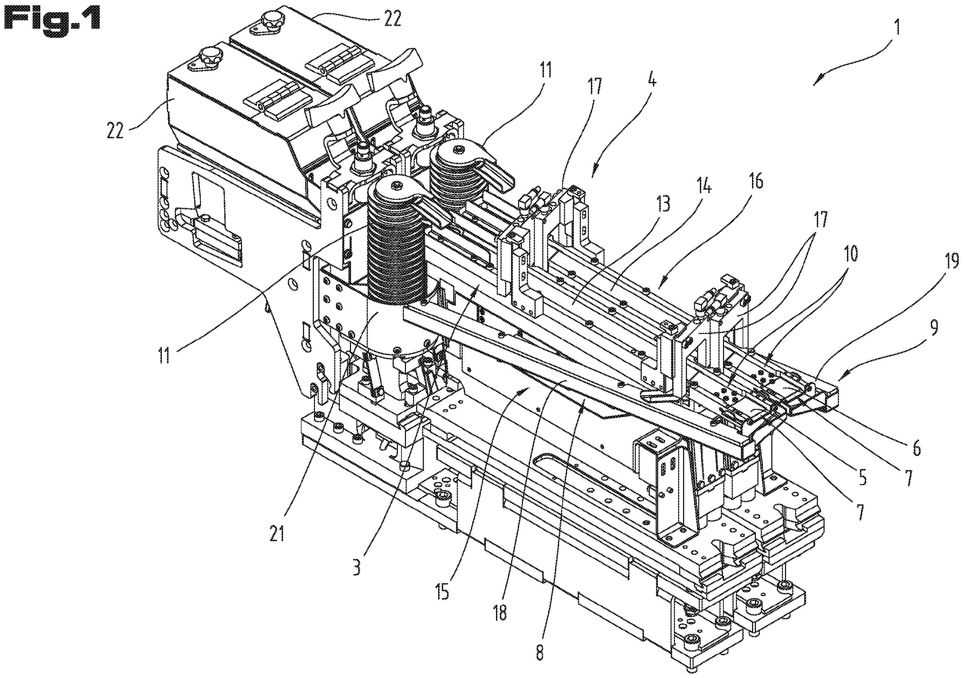

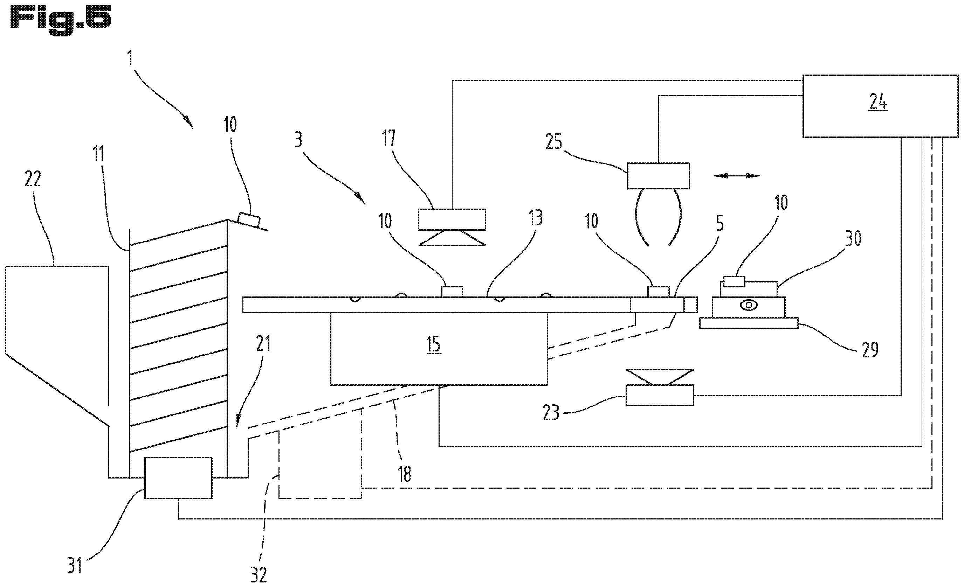

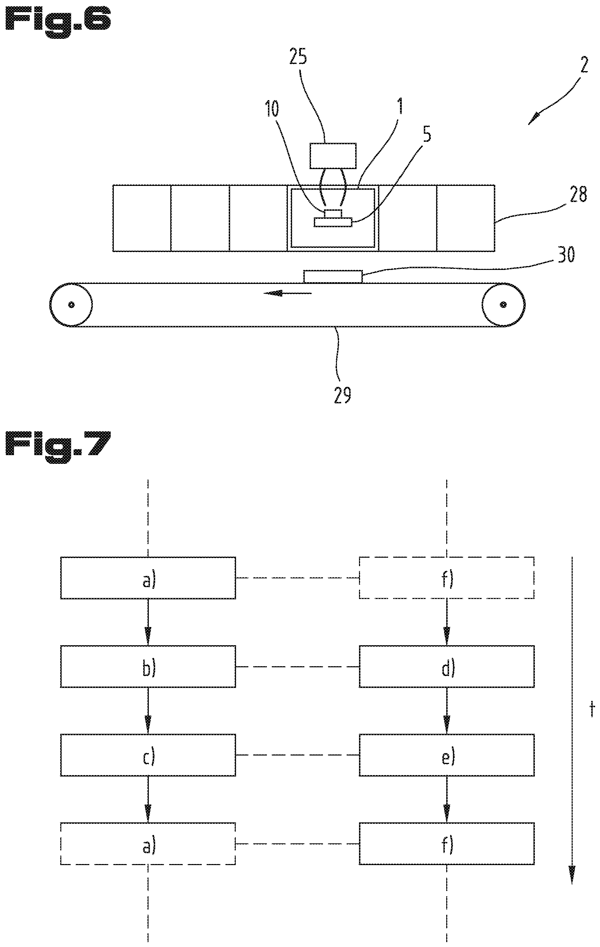

Fig. 1 zeigt eine erfindungsgemäße Bauteile-Bereitstellungsvorrichtung 1 für eine Fertigungsanlage 2 (Fig. 5 und 6). Diese umfasst eine erste Bereitstellungsplattform 5 und eine erste Zuführeinrichtung 3 zum Zuführen von Bauteilen 10 zur ersten Bereitstellungsplattform 5, sowie eine zweite Bereitstellungsplattform 6 und eine zweite Zuführeinrichtung 6 zum Zuführen von Bauteilen 10 zur zweiten Bereitstellungsplattform 6.

Von den Bereichen der Bereitstellungsplattformen 5, 6, geht jeweils eine Rückführeinrichtung 8, 9 aus, die in die zugehörige Zuführeinrichtung 3, 4 (hier: in deren Anfangsbereich) einmündet. Im Bereich einer Bereitstellungsplattform 5, 6 ist ein Überlauf 7 ausgebildet, der in die jeweilige Rückführeinrichtung 8, 9 mündet.

Wie aus Fig. 1 ersichtlich umfassen die Zuführeinrichtungen 3, 4 jeweils eine Hochfördereinrichtung 11 zum Fördern der Bauteile 10 von einem niedrigeren auf ein höheres Niveau. In der dargestellten Ausführungsform handelt es sich dabei um einen Schwingförderer mit spiralförmig nach oben verlaufendem Förderpfad.

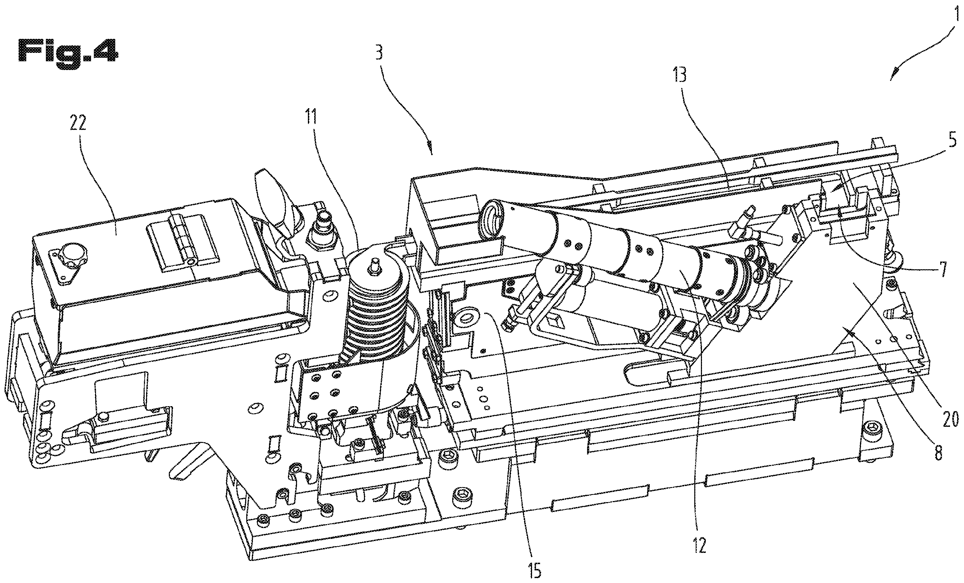

In der Ausführungsform der Fig. 4 umfasst (auch) die Rückführeinrichtung 8 eine Hochfördereinrichtung 12 zum Fördern der Bauteile 10 von einem niedrigeren auf ein höheres Niveau. In der Ausführungsform der Fig. 4 wird die Hochfördereinrichtung 12 durch eine geneigte archimedische Schraube mit einem Drehantrieb gebildet. Die archimedische Schraube mündet in die Zuführeinrichtung 3 ein.

Die Zuführeinrichtungen 3, 4 umfassen in der Ausführungsform der Fig. 1 jeweils einen Schwingförderer mit einer im Wesentlichen gerade verlaufenden Bahn 13, 14 und einem mit der Bahn gekoppelten Schwingförderantrieb 15, 16. Die Bahn 13, 14 der Zuführeinrichtung 3, 4 umfasst Schikanen, insbesondere Vertiefungen, Rillen, Erhebungen oder Hindernisse, denen die Bauteile 10 während des Zuführvorganges ausgesetzt sind (in Fig. 5 schematisch angedeutet) und durch die sie vereinzelt und bevorzugt orientiert werden.

Entlang der Förderrichtung der Zuführeinrichtung 3, 4 ist zumindest eine Bauteil-Sensoreinrichtung 17, insbesondere eine Lichtschranke, zur Detektion der geförderten Bauteile 10 angeordnet.

Die Rückführeinrichtungen 8, 9 aus Fig. 1 umfassen - wie die Zuführeinrichtungen 3, 4 - jeweils eine im Wesentlichen gerade verlaufende Bahn 18, 19, die vorzugsweise mit demselben Schwingförderantrieb 15, 16 gekoppelt ist wie die Bahn 13, 14 der Zuführeinrichtung 3, 4. Um die Förderung der überschüssigen oder falsch orientierten Bauteile in entgegengesetzte Richtung mit demselben Schwingförderantrieb zu gewährleisten, ist die Bahn 18, 19 der Rückführeinrichtung 8, 9 (in Förderrichtung) stärker geneigt als die Bahn 13, 14 der Zuführeinrichtung 3, 4.

In der Ausführungsform gemäß Fig. 4 umfasst die Rückführeinrichtung 8 auch eine Fallstrecke 20, die im Bereich der Bereitstellungsplattform 5 beginnt.

Wie aus Fig. 1 zu sehen umfassen die Zuführeinrichtungen 3, 4 jeweils ein Bauteile-Zwischenreservoir 21, wobei die Rückführeinrichtungen 8, 9 in das zugehörige Bauteile-Zwischenreservoir 21 münden. Die Hochfördereinrichtung 11 der Zuführeinrichtung 3, 4 geht dabei von dem Bauteile-Zwischenreservoir 21 aus.

Die Bereitstellungsplattformen 5, 6 sind jeweils im Endbereich einer Bahn 13, 14 ausgebildet. In der bevorzugten Ausführungsform ist die Bereitstellungsplattform 5, 6 sogar ein Teil der jeweiligen Zuführeinrichtung 3, 4 und ist vorzugsweise, z.B. als durchsichtiges Plättchen, in der Bahn 13, 14 der Zuführeinrichtung 3, 4 integriert.

Wie bereits erwähnt besteht eine eigenständige erfinderische Lösung darin, dass die Bereitstellungsplattform 5, 6 zumindest teilweise durchsichtig ausgebildet ist und die Bauteile-Bereitstellungsvorrichtung 1 eine optische Sensoreinrichtung 23, insbesondere eine Kamera, umfasst, die unterhalb der Bereitstellungsplattform 5, 6 angeordnet ist, wodurch auf der Bereitstellungsplattform 5, 6 liegende Bauteile 10 mittels der Sensoreinrichtung 23 von unten detektierbar sind. Eine solche Anordnung ist in Fig. 5 dargestellt.

Wie bereits erwähnt - und als ebenfalls eigenständige erfinderische Lösung zu sehen - umfasst die Bauteile-Bereitstellungsvorrichtung 1 eine erste Zuführeinrichtung 3 zum Zuführen von Bauteilen 10 zu einer Bereitstellungsplattform 5, die der ersten Zuführeinrichtung 3 zugeordnet ist, und eine zweite Zuführeinrichtung 4 zum Zuführen von Bauteilen 10 zu einer Bereitstellungsplattform 6, die der zweiten Zuführeinrichtung 4 zugeordnet ist. Die beiden Zuführeinrichtungen 3, 4 weisen im Wesentlichen dieselbe Förderrichtung auf, d.h. die Förderrichtungen sind im Wesentlichen parallel zueinander. Dabei verlaufen die Bahnen 13, 14 der Zuführeinrichtungen 3, 4 nebeneinander. Die Bahnen 13, 14 der Zuführeinrichtungen 3, 4 sind dabei zwischen den Bahnen 18, 19 der Rückführeinrichtungen 8, 9 angeordnet.

Die Bauteile-Bereitstellungsvorrichtung 1 ist - in den bevorzugten Ausführungsformen der Fig. 1 und 4 - als Einschubmodul für eine modulartig aufgebaute Fertigungsanlage 2 (Fig. 6) ausgebildet. Das Einschubmodul umfasst eine Basis, z.B. einen Rahmen, eine Plattform oder ein Gerüst, die die Zuführeinrichtung bzw. die Bereitstellungsplattform, sowie gegebenenfalls die Rückführeinrichtung und Bauteile-Reservoir(s) trägt. An der Basis sind Befestigungseinrichtungen ausgebildet, um das Einschubmodul mit einem Lagerrahmen einer Fertigungsanlage zu befestigen. Das Einschubmodul weist eine längliche Form auf. Dabei ist die Bereitstellungsplattform 5, 6 im Bereich des vorderen Modulendes und ein Bauteile-Reservoir 22 im Bereich des hinteren Modulendes angeordnet.

Fig. 5 und 6 zeigen (in schematischer Ansicht) eine Fertigungsanlage zur Fertigung von Baugruppen 30 aus einzelnen Bauteilen 10. Die Fertigungsanlage umfasst eine Steuereinrichtung 24, eine Bauteile-Bereitstellungsvorrichtung 1 und eine Handhabungseinrichtung 25, hier in Form einer Greifereinrichtung, zur Entnahme der Bauteile 10 von der Bereitstellungsplattform 5,6.

Fig. 5 zeigt darüber hinaus, dass die einzelnen Förderantriebe 15, 31, 32, die Sensoreinrichtungen 17, 23 und die Handhabungseinrichtung 25 mit der Steuereinrichtung 24 verbunden sind. Das Bauteile-Reservoir 22 mündet (direkt oder indirekt) in das Bauteile-Zwischenreservoir 21, in das auch die Rückführeinrichtung mündet. Zu sehen ist auch eine Transporteinrichtung 29, die senkrecht zur Bildebene bewegt wird und eine entstehende Baugruppe 30 trägt. Die Handhabungseinrichtung überträgt dabei ein einzelnes Bauteil 10 zur Baugruppe 30.

Fig. 6 zeigt eine modulartig aufgebaute Fertigungsanlage 2 mit einem Lagerrahmen 28, die jeweils entsprechend dimensionierte Räume zum Einbringen und Befestigen von Einschubmodulen bereitstellt. Diese bilden jeweils Arbeitsstationen. In Fig. 6 ist (der Übersichtlichkeit halber) als Einschubmodul nur die Bauteile-Bereitstellungseinrichtung 1 mit der Bereitstellungsplattform 5 dargestellt. Eine Transporteinrichtung 29 (hier in Form eines Förderbandes) transportiert eine gerade entstehende Baugruppe 30 von einer Arbeitsstation zu nächsten. Die entstehende Baugruppe kann direkt auf der Transporteinrichtung liegen oder in einer dafür vorgesehenen Transportplattform (manchmal auch als Wagen bezeichnet). Die Handhabungsvorrichtung 25 nimmt ein Bauteil 10 von der Bereitstellungsplattform, um es dann auf oder an die entstehende Baugruppe zu heben. Die endgültige Befestigung des Bauteiles an der entstehenden Baugruppe kann z.B. in einer der folgenden Arbeitsstationen erfolgen.

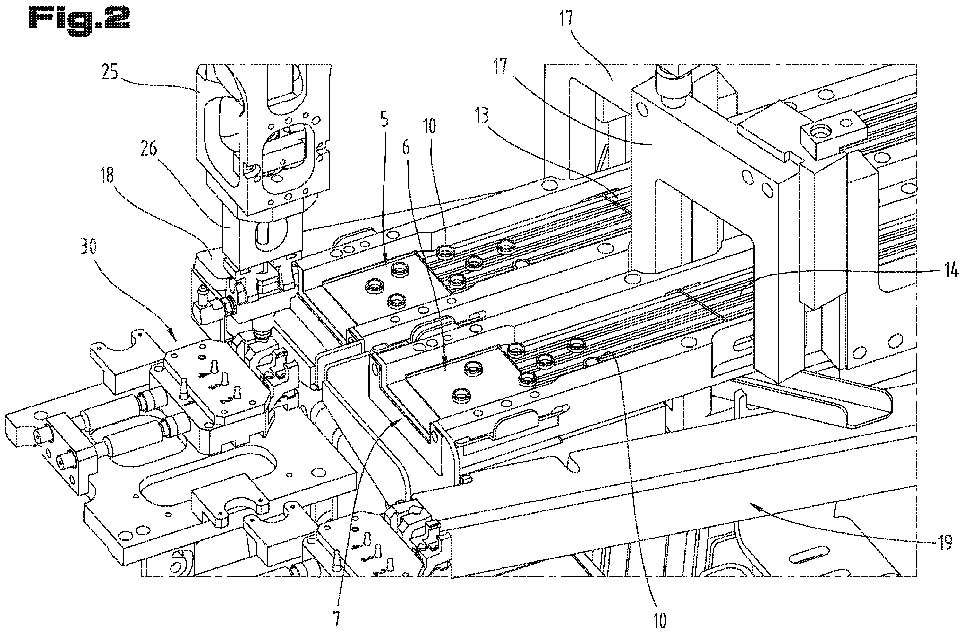

Fig. 2 zeigt eine Variante der Erfindung mit einer Handhabungseinrichtung 25, die eine Art Greifer umfasst. Die Handhabungseinrichtung 25 ist dazu eingerichtet, von beiden Bereitstellungsplattformen 5, 6 (nacheinander bzw. intermittierend) Bauteile 10 zu entnehmen. Es ist somit ein Greifer beiden Bereitstellungsplattformen zugeordnet. Die auf den beiden Bereitstellungsplattformen 5, 6 bereitgestellten Bauteile 10 sind vorzugsweise desselben Typs. Das dazugehörige Verfahren wird weiter unten näher beschrieben. Der Begriff Greifer ist in vorliegender Anmeldung breit zu verstehen und umfasst nicht nur einen Greifer mit zwei zueinander bewegbaren Greiferarmen, sondern auch Greifer mit einem nicht beweglichen Teil, das in eine Ausnehmung des Bauteils 10 eingreift. Schließlich sind auch (elektromagnetische Greifereinrichtungen denkbar.

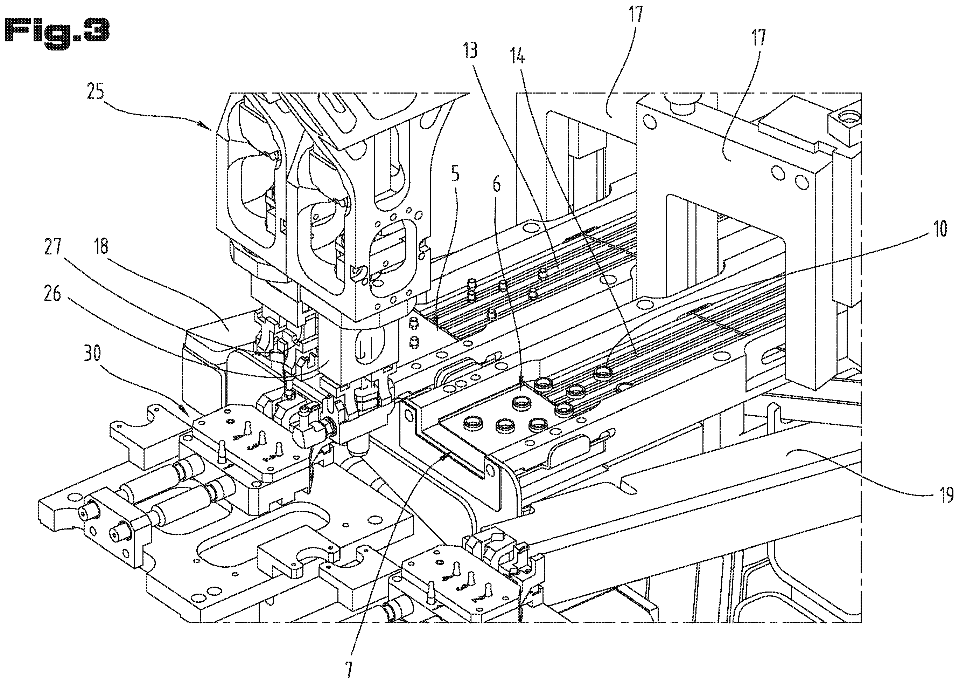

Fig. 3 zeigt eine Variante, bei der die Handhabungseinrichtung 25 zwei Untereinheiten 26, 27 umfasst, wobei eine Untereinheit 26 der Bereitstellungsplattform 5 der ersten Zuführeinrichtung 3 zugeordnet ist und die andere Untereinheit 27 der Bereitstellungsplattform 6 der zweiten Zuführeinrichtung 4 zugeordnet ist. Die Untereinheiten 26, 27 der Handhabungseinrichtung 25 sind bevorzugt unabhängig voneinander betätigbar bzw. verfahrbar. Auf diese Weise können auch Bauteile unterschiedlichen Typs auf den jeweiligen Bereitstellungsplattformen bereitgestellt werden.

Im Folgenden wird ein Verfahren zum Bereitstellen und Entnehmen von Bauteilen 10 in einer Fertigungsanlage 2 näher beschrieben. Diese umfasst die Schritte:
- Bereitstellung zumindest eines Bauteiles 10 auf einer Bereitstellungsplatt-form 5, 6 mittels einer Bauteile-Bereitstellungsvorrichtung 1;
- vorzugsweise Detektion des zumindest einen Bauteils 10 auf der Bereitstellungsplattform 5, 6 mittels einer Sensoreinrichtung 23 (Fig. 5);
- Entnahme des zumindest einen Bauteiles 10 von der Bereitstellungsplatt-form 5, 6 mittels einer Handhabungseinrichtung 25, insbesondere einer Greifereinrichtung.

Das Bauteil wird mit der Handhabungseinrichtung (z.B. Roboter, Greifer, etc.) anschließend auf oder an die entstehende Baugruppe gebracht.

Der Förderantrieb 15, 16 der Zuführeinrichtung 3, 4 kann während der Entnahme des zumindest einen Bauteiles 10 von der ihr zugeordneten Bereitstellungsplattform 5, 6 und gegebenenfalls während der Detektion des zumindest einen Bauteils 10 auf der ihr zugeordneten Bereitstellungsplattform 5, 6 still stehen.

Unter Bezugnahme auf Fig. 2 und Fig. 7 wird nun eine bevorzugte Verfahrensvariante beschrieben. Ein solches Verfahren umfasst die Schritte:
a) mittels der ersten Zuführeinrichtung 3: Fördern von zumindest einem Bau-teil 10 auf die Bereitstellungsplattform 5, die der ersten Zuführeinrichtung 3 zugeordnet ist;
b) Detektion des zumindest einen Bauteils 10 auf der Bereitstellungsplatt-form 5, die der ersten Zuführeinrichtung 3 zugeordnet ist, mittels einer Sensoreinrichtung 23 (Fig. 5), insbesondere hinsichtlich seiner Lage und/oder Orientierung;
c) Entnahme des zumindest einen Bauteils 10 von der Bereitstellungsplatt-form 5, die der ersten Zuführeinrichtung 3 zugeordnet ist, mittels der Handhabungseinrichtung 25;
d) mittels der zweiten Zuführeinrichtung 4: Fördern von zumindest einem Bauteil 10 auf die Bereitstellungsplattform 6, die der zweiten Zuführeinrichtung 4 zugeordnet ist;
e) Detektion des zumindest einen Bauteils 10 auf der Bereitstellungsplattform 6, die der zweiten Zuführeinrichtung 4 zugeordnet ist, mittels einer Sensoreinrichtung 23 (Fig. 5), insbesondere hinsichtlich seiner Lage und/oder Orientierung;
f) Entnahme des zumindest einen Bauteils 10 von der Bereitstellungsplatt-form 6, die der zweiten Zuführeinrichtung 4 zugeordnet ist, mittels der Handhabungseinrichtung 25;
wobei die Abfolge der Schritte a) bis c) mit der Abfolge der Schritte d) bis f) zeitlich überlappt (Fig. 7), und wobei vorzugsweise die Schritte a) bis f) wiederholt werden.

Dabei betreffen die Schritte a) bis c) und die Schritte d) bis f) vorzugsweise dieselbe Art von Bauteilen 10. Die Taktzeiten zur Bereitstellung und Verarbeitung von Bauteilen desselben Typs werden dadurch erheblich reduziert.

Bevorzugt wird auch, dass die Zuführeinrichtung(en) 3, 4 derart gesteuert wird/werden, dass während eines Zuführvorganges nur ein Bauteil 10 auf die der jeweiligen Zuführeinrichtung 3, 4 zugeordneten Bereitstellungsplattform 5, 6 gelangt.

Wie bereits mehrfach erwähnt ist es von Vorteil, dass die Bereitstellungsplattform(en) 5, 6 durchsichtig ausgebildet ist/sind und die Bauteile 10 auf der Bereitstellungsplattform 5, 6 mittels einer optischen Sensoreinrichtung 23 von unten detektiert werden. Die Handhabungseinrichtung 25 fährt von oben oder von der Seite auf einen auf der Bereitstellungsplattform 5, 6 liegenden Bauteil 10 zu.

Die Handhabungseinrichtung 25 wird von der Steuereinrichtung 24 (Fig. 5) in Abhängigkeit zumindest einer Sensoreinrichtung 23 gesteuert, die Bauteile 10 auf der Bereitstellungsplattform 5, 6 detektiert.

Die Rückführeinrichtung 8, 9 umfasst gemäß Fig. 4 eine Hochfördereinrichtung 12 (hier in Form einer archimedischen Schraube). Diese wird in Abhängigkeit von zumindest einer Bauteil-Sensoreinrichtung 17, die die geförderten Bauteile 10 in der Zuführeinrichtung 3, 4 detektiert, gesteuert.

Überschüssige Bauteile 10 und/oder Bauteile 10, die auf der Bereit-stellungsplattform 5, 6 nicht in der für die Entnahme erforderlichen Lage orientiert sind, können durch Betätigung der Zuführeinrichtung 3, 4, insbesondere durch Betätigung des Schwingförderantriebes 15, 16 in die Rückführeinrichtung 8, 9 gebracht werden.

Abschließend wird darauf hingewiesen, dass die dargestellten Ausführungsbeispiele lediglich Beispiele der Erfindung darstellen. Alternativ kann eine Bauteile-Bereitstellungseinrichtung auch mehr als zwei Zuführeinrichtung sowie Bereitstellungsplattformen aufweisen. Auch ist es möglich, dass die Rückführeinrichtung aus Fig. 4 in der Ausführungsform der Fig. 1 implementiert ist (und dort anstelle in das Zwischenreservoir 21 direkt in die Bahn 13, 14 der Zuführeinrichtung 3, 4 mündet).

**Bezugszeichenaufstellung**

| | | | |
|---|---|---|---|
| 1 | Bauteile-Bereitstellungsvorrichtung | 24 | Steuereinrichtung |
| | | 25 | Handhabungseinrichtung |
| 2 | Fertigungsanlage | 26 | Erste Untereinheit der Handhabungsvorrichtung 25 |
| 3 | Erste Zuführeinrichtung | | |
| 4 | Zweite Zuführeinrichtung | 27 | Zweite Untereinheit der Handhabungsvorrichtung 25 |
| 5 | Erste Bereitstellungsplattform | | |
| 6 | Zweite Bereitstellungsplattform | 28 | Lagerrahmen |
| 7 | Überlauf | 29 | Transporteinrichtung |
| 8 | Rückführeinrichtung | 30 | Baugruppe |
| 9 | Rückführeinrichtung | 31 | Förderantrieb der Hochfördereinrichtung 11 |
| 10 | Bauteil | | |
| 11 | Hochfördereinrichtung | 32 | Förderantrieb der Rückführeinrichtung 8 |
| 12 | Hochfördereinrichtung | | |
| 13 | Bahn der ersten Zuführeinrichtung 3 | | |
| 14 | Bahn der zweiten Zuführeinrichtung 4 | | |
| 15 | Förderantrieb der ersten Zuführeinrichtung 3 | | |
| 16 | Förderantrieb der zweiten Zuführeinrichtung 4 | | |
| 17 | Bauteil-Sensoreinrichtung | | |
| 18 | Bahn der ersten Rückführeinrichtung 8 | | |
| 19 | Bahn der zweiten Rückführeinrichtung 9 | | |
| 20 | Fallstrecke | | |
| 21 | Bauteile-Zwischenreservoir | | |
| 22 | Bauteile-Reservoir | | |
| 23 | Sensoreinrichtung | | |

## Patentansprüche

1. Fertigungsanlage zur Fertigung von Baugruppen (30) aus einzelnen Bauteilen (10), umfassend:
- eine Steuereinrichtung (24) und
- zumindest eine Bauteile-Bereitstellungsvorrichtung (1), die eine erste Zuführeinrichtung (3) zum Zuführen von Bauteilen (10) zu einer Bereitstellungsplattform (5), die der ersten Zuführeinrichtung (3) zugeordnet ist, umfasst,
**dadurch gekennzeichnet, dass** die Bauteile-Bereitstellungsvorrichtung (1) eine zweite Zuführeinrichtung (4) zum Zuführen von Bauteilen (10) zu einer Bereitstellungsplattform (6), die der zweiten Zuführeinrichtung (4) zugeordnet ist, umfasst, wobei die Zuführeinrichtungen (3, 4) im Wesentlichen dieselbe Förderrichtung aufweisen und die Bereitstellungsplattformen (5, 6) nebeneinander liegen, und dass die Zuführeinrichtungen (3, 4) jeweils einen Schwingförderer mit einer im Wesentlichen gerade verlaufenden Bahn (13, 14) und einen mit der Bahn gekoppelten Schwingförderantrieb (15, 16) umfassen, wobei die Bahnen (13, 14) der Zuführeinrichtungen (3, 4) nebeneinander verlaufen, und dass die Zuführeinrichtungen (3, 4) jeweils eine Rückführeinrichtung (8, 9) aufweisen, die vom Bereich der jeweiligen Bereitstellungsplattform (5, 6) ausgeht und in die zugehörige Zuführeinrichtung (3, 4), vorzugsweise in deren Anfangsbereich, einmündet, und dass die Zuführeinrichtungen (3, 4) intermittierend betätigbar sind,
und dass die Fertigungsanlage zumindest eine Handhabungseinrichtung (25), insbesondere eine Greifereinrichtung, zur Entnahme der Bauteile (10) von den Bereitstellungsplattformen (5, 6) umfasst, wobei die Bereitstellungsplattformen (5, 6) der Bereitstellungsvorrichtung (1) von derselben Handhabungseinrichtung (25) angefahren werden können.

2. Fertigungsanlage nach Anspruch 1, **dadurch gekennzeichnet, dass** im Bereich der Bereitstellungsplattform (5, 6) ein Überlauf (7) ausgebildet ist, der in die Rückführeinrichtung (8, 9) mündet und/oder dass die Rückführeinrichtung (8, 9) eine Fallstrecke (20) umfasst, die im Bereich der Bereitstellungsplattform (5, 6) beginnt und/oder dass die Bahnen (3, 4) der Zuführeinrichtungen zwischen den Rückführeinrichtungen (8, 9) angeordnet sind.

3. Fertigungsanlage nach Anspruch 1 oder 2, **dadurch gekennzeichnet, dass** die Zuführeinrichtung (3, 4) und/oder die Rückführeinrichtung (8, 9) eine Hochfördereinrichtung (11, 12) zum Fördern der Bauteile (10) von einem niedrigeren auf ein höheres Niveau umfasst, wobei vorzugsweise die Hochfördereinrichtung (11, 12) eine archimedische Schraube oder einen Schwingförderer mit spiralförmig nach oben verlaufendem Förderpfad umfasst.

4. Fertigungsanlage nach einem der vorhergehenden Ansprüche, **dadurch gekennzeichnet, dass** die Bahn (13, 14) der Zuführeinrichtung (3, 4) Schikanen, insbesondere Vertiefungen, Erhebungen oder Hindernisse, umfasst, denen die Bauteile (10) während des Zuführvorganges ausgesetzt sind.

5. Fertigungsanlage nach einem der vorhergehenden Ansprüche, **dadurch gekennzeichnet, dass** entlang der Förderrichtung der Zuführeinrichtung (3, 4) zumindest eine Bauteil-Sensoreinrichtung (17), insbesondere eine Lichtschranke, zur Detektion der geförderten Bauteile (10) angeordnet ist.

6. Fertigungsanlage nach einem der vorhergehenden Ansprüche, **dadurch gekennzeichnet, dass** die Rückführeinrichtung (8, 9) eine im Wesentlichen gerade verlaufende Bahn (18, 19) umfasst, die vorzugsweise mit demselben Schwingförderantrieb (15, 16) gekoppelt ist wie die Bahn (13, 14) der Zuführeinrichtung (3, 4), wobei vorzugsweise die Bahn (18, 19) der Rückführeinrichtung (8, 9) stärker geneigt ist als die Bahn (13, 14) der Zuführeinrichtung (3, 4).

7. Fertigungsanlage nach einem der vorhergehenden Ansprüche, **dadurch gekennzeichnet, dass** die Zuführeinrichtung (3, 4) ein Bauteile-Zwischenreservoir (21) umfasst und die Rückführeinrichtung (8, 9) in das Bauteile-Zwischenreservoir (21) mündet, wobei vorzugsweise eine Hochfördereinrichtung (11) der Zuführeinrichtung (3, 4) von dem Bauteile-Zwischenreservoir (21) ausgeht.

8. Fertigungsanlage nach einem der vorhergehenden Ansprüche, **dadurch gekennzeichnet, dass** die Bereitstellungsplattform (5, 6) im Endbereich der Bahn (13, 14) der Zuführeinrichtung (3, 4) ausgebildet ist und/oder dass die Bereitstellungsplattform (5, 6) ein Teil der Zuführeinrichtung (3, 4) ist, vorzugsweise in der Bahn (13, 14) der Zuführeinrichtung (3, 4) integriert ist.

9. Fertigungsanlage nach einem der vorhergehenden Ansprüche, , **dadurch gekennzeichnet, dass** die Bereitstellungsplattform (5, 6) zumindest teilweise durchsichtig ausgebildet ist und die Bauteile-Bereitstellungsvorrichtung (1) eine optische Sensoreinrichtung (23), insbesondere eine Kamera, umfasst, die unterhalb der Bereitstellungsplattform (5, 6) angeordnet ist, wodurch auf der Bereitstellungsplattform (5, 6) liegende Bauteile (10) mittels der Sensoreinrichtung (23) von unten detektierbar sind.

10. Fertigungsanlage nach einem der vorhergehenden Ansprüche, **dadurch gekennzeichnet, dass** die Bauteile-Bereitstellungsvorrichtung (1) als Einschubmodul für eine modulartig aufgebaute Fertigungsanlage (2) ausgebildet ist, wobei vorzugsweise das Einschubmodul eine längliche Form aufweist und die Bereitstellungsplattform (5, 6) im Bereich des vorderen Modulendes und ein Bauteile-Reservoir (22) im Bereich des hinteren Modulendes angeordnet ist.

11. Fertigungsanlage nach einem der vorhergehenden Ansprüche, **dadurch gekennzeichnet, dass** die Handhabungseinrichtung (25) zumindest zwei Untereinheiten (26, 27) umfasst, wobei eine Untereinheit (26) der Bereitstellungsplattform (5) der ersten Zuführeinrichtung (3) zugeordnet ist und die andere Untereinheit (27) der Bereitstellungsplattform (6) der zweiten Zuführeinrichtung (4) zugeordnet ist, wobei vorzugsweise die Untereinheiten (26, 27) der Handhabungseinrichtung (25) unabhängig voneinander betätigbar sind.

12. Verfahren zum Bereitstellen und Entnehmen von Bauteilen (10) in einer Fertigungsanlage (2) nach einem der vorhergehenden Ansprüche, **gekennzeichnet durch** die Schritte:
- Bereitstellung zumindest eines Bauteiles (10) auf einer Bereitstellungsplattform (5, 6) mittels der Bauteile-Bereitstellungsvorrichtung (1);
- vorzugsweise Detektion des zumindest einen Bauteils (10) auf der Bereitstellungsplattform (5, 6) mittels einer Sensoreinrichtung (23);
- Entnahme des zumindest einen Bauteiles (10) von der Bereitstellungsplattform (5, 6) mittels der Handhabungseinrichtung (25), insbesondere einer Greifereinrichtung.

13. Verfahren nach Anspruch 12, **dadurch gekennzeichnet, dass** die Zuführeinrichtungen (3, 4) jeweils intermittierend betätigt werden, wobei, während eine Zuführeinrichtung still steht, die andere betätigt wird, und umgekehrt, und wobei, während ein Bauteil von der einen Bereitstellungsplattform entnommen wird, parallel dazu ein Bauteil auf der anderen Bereitstellungsplattform bereitgestellt wird.

14. Verfahren nach Anspruch 12 oder 13, **dadurch gekennzeichnet, dass** der Förderantrieb (15, 16) der Zuführeinrichtung (3, 4) während der Entnahme des zumindest einen Bauteiles (10) von der ihr zugeordneten Bereitstellungsplattform (5, 6) und gegebenenfalls während der Detektion des zumindest einen Bauteils (10) auf der ihr zugeordneten Bereitstellungsplattform (5, 6) still steht.

15. Verfahren nach einem der Ansprüche 12 bis 14, bei dem die Bauteil-Bereitstellungsvorrichtung (1) eine erste Zuführeinrichtung (3) zum Zuführen von Bauteilen (10) zu einer Bereitstellungsplattform (4), die der ersten Zuführeinrichtung (3) zugeordnet ist, und eine zweite Zuführeinrichtung (4) zum Zuführen von Bauteilen (10) zu einer Bereitstellungsplattform (6), die der zweiten Zuführeinrichtung (4) zugeordnet ist, umfasst, **gekennzeichnet durch** die Schritte:
a) mittels der ersten Zuführeinrichtung (3): Fördern von zumindest einem Bauteil (10) auf die Bereitstellungsplattform (5), die der ersten Zuführeinrichtung (3) zugeordnet ist;
b) Detektion des zumindest einen Bauteils (10) auf der Bereitstellungsplattform (5), die der ersten Zuführeinrichtung (3) zugeordnet ist, mittels einer Sensoreinrichtung (23), insbesondere hinsichtlich seiner Lage und/oder Orientierung;
c) Entnahme des zumindest einen Bauteils (10) von der Bereitstellungsplattform (5), die der ersten Zuführeinrichtung (3) zugeordnet ist, mittels der Handhabungseinrichtung (25);
d) mittels der zweiten Zuführeinrichtung (4): Fördern von zumindest einem Bauteil (10) auf die Bereitstellungsplattform (6), die der zweiten Zuführeinrichtung (4) zugeordnet ist;
e) Detektion des zumindest einen Bauteils (10) auf der Bereitstellungsplattform (6), die der zweiten Zuführeinrichtung (4) zugeordnet ist, mittels einer Sensoreinrichtung (23), insbesondere hinsichtlich seiner Lage und/oder Orientierung;
f) Entnahme des zumindest einen Bauteils (10) von der Bereitstellungsplattform (6), die der zweiten Zuführeinrichtung (4) zugeordnet ist, mittels der Handhabungseinrichtung (25);
wobei die Abfolge der Schritte a) bis c) mit der Abfolge der Schritte d) bis f) zeitlich überlappt, und wobei vorzugsweise die Schritte a) bis f) wiederholt werden.

16. Verfahren nach Anspruch 15, **dadurch gekennzeichnet, dass** die Schritte a) bis c) und die Schritte d) bis f) dieselbe Art von Bauteilen (10) betreffen und/oder dass der Förderantrieb der ersten Zuführeinrichtung (3) während der Schritte b) und c) still steht und der Förderantrieb der zweiten Zuführeinrichtung (4) während der Schritte e) und f) still steht und/oder dass die Zuführeinrichtung(en) (3, 4) derart gesteuert wird/werden, dass während eines Zuführvorganges nur ein Bauteil (10) auf die der jeweiligen Zuführeinrichtung (3, 4) zugeordneten Bereitstellungsplattform (5, 6) gelangt.

17. Verfahren nach einem der Ansprüche 12 bis 16, **dadurch gekennzeichnet, dass** die Bereitstellungsplattform(en) (5, 6) durchsichtig ausgebildet ist/sind und die Bauteile (10) auf der Bereitstellungsplattform (5, 6) mittels einer optischen Sensoreinrichtung (23) von unten detektiert werden und/oder dass die Handhabungseinrichtung (25) von der Steuereinrichtung (24) in Abhängigkeit zumindest einer Sensoreinrichtung (23) gesteuert wird, die Bauteile auf der Bereitstellungsplattform (5, 6) detektiert.

18. Verfahren nach einem der Ansprüche 12 bis 17, **dadurch gekennzeichnet, dass** die Rückführeinrichtung (8, 9) eine Hochfördereinrichtung (12) umfasst, die in Abhängigkeit von zumindest einer Bauteil-Sensoreinrichtung (17), die die geförderten Bauteile (10) in der Zuführeinrichtung (3, 4) detektiert, gesteuert wird und/oder dass überschüssige Bauteile (10) und/oder Bauteile (10), die auf der Bereitstellungsplattform (5, 6) nicht in der für die Entnahme erforderlichen Lage orientiert sind, durch Betätigung der Zuführeinrichtung (3, 4), insbesondere durch Betätigung des Schwingförderantriebes (15, 16) in die Rückführeinrichtung (8, 9) gebracht werden.

## Claims

1. A production plant for producing assemblies (30) from individual components (10), comprising:
- a controller (24) and
- at least one component provision device (1) comprising a first feed device (3) for feeding components (10) to a provision platform (5), which is assigned to the first feed device (3),
**characterized in that** the component provision device (1) comprises a second feed device (4) for feeding components (10) to a provision platform (6), which is assigned to the second feed device (4), wherein the feed devices (3, 4) comprise essentially the same conveying direction and the provision platforms (5, 6) are located next to one another, and that the feed devices (3, 4) each comprise a vibratory conveyor with an essentially straightly extending track (13, 14) and a vibratory conveyor drive (15, 16) coupled to the track, wherein the tracks (13, 14) of the feed devices (3, 4) extend next to one another, and that the feed devices (3, 4) each comprise a return device (8, 9), which starts out from the region of the respective provision platform (5, 6) and leads into the associated feed device (3, 4), preferably into the starting region thereof, and that the feed devices (3, 4) are intermittently actuatable,
and that the production plant comprises at least one handling device (25), in particular a gripper device, for removing the components (10) from the provision platforms (5, 6), wherein the provision platforms (5, 6) of the provision device (1) can be approached by said handling device (25).

2. The production plant according to claim 1, **characterized in that** an overflow (7) is formed in the region of the provision platform (5, 6), said overflow (7) leading into the return device (8, 9) and/or that the return device (8, 9) comprises a drop section (20) starting in the region of the provision platform (5, 6) and/or that the tracks (3, 4) of the feed devices are arranged between the return devices (8, 9).

3. The production plant according to claim 1 or 2, **characterized in that** the feed devices (3, 4) and/or the return devices (8, 9) comprise(s) an upwards conveyor device (11, 12) for conveying the components (10) from a lower to a higher level, wherein preferably the upwards conveyor device (11, 12) comprises an Archimedean screw or a vibratory conveyor with a spirally upwards extending conveying path.

4. The production plant according to one of the preceding claims, **characterized in that** the track (13, 14) of the feed device (3, 4) comprises chicanes, in particular recesses, elevations or obstacles, which the components (10) are exposed to during the feed operation.

5. The production plant according to one of the preceding claims, **characterized in that** at least one component sensor device (17), in particular a light barrier, for detecting the conveyed components (10) is arranged along the conveying direction of the feed devices (3, 4).

6. The production plant according to one of the preceding claims, **characterized in that** the return device (8, 9) comprises an essentially straightly extending track (18, 19), which is preferably coupled to the same vibratory conveyor drive (15, 16) as the track (13, 14) of the feed device (3, 4), wherein preferably the track (18, 19) of the return device (8, 9) is more inclined than the track (13, 14) of the feed device (3, 4).

7. The production plant according to one of the preceding claims, **characterized in that** the feed device (3, 4) comprises an intermediate component reservoir (21) and the return device (8, 9) leads into the intermediate component reservoir (21), wherein preferably an upwards conveyor device (11) of the feed device (3, 4) starts out from the intermediate component reservoir (21).

8. The production plant according to one of the preceding claims, **characterized in that** the provision platform (5, 6) is formed in the end region of the track (13, 14) of the feed device (3, 4) and/or that the provision platform (5, 6) is a part of the feed device (3, 4), preferably is integrated in the track (13, 14) of the feed device (3, 4).

9. The production plant according to one of the preceding claims, **characterized in that** the provision platform (5, 6) is formed to be at least partially translucent and the component provision device (1) comprises an optical sensor device (23), in particular a camera, which is arranged below the provision platform (5, 6), whereby components (10) lying on the provision platform (5, 6) can be detected from below by means of the sensor device (23).

10. The production plant according to one of the preceding claims, **characterized in that** the component provision device (1) is formed as a slide-in module for a modularly structured production plant (2), wherein preferably the slide-in module has an elongate shape and the provision platform (5, 6) is arranged in the region of the front module end and a component reservoir (22) is arranged in the region of the back module end.

11. The production plant according to one of the preceding claims, **characterized in that** the handling device (25) comprises at least two sub-units (26, 27), wherein one sub-unit (26) is assigned to the provision platform (5) of the first feed device (3) and the other sub-unit (27) is assigned to the provision platform (6) of the second feed device (4), wherein preferably the sub-units (26, 27) of the handling device (25) can be actuated independently.

12. A method for providing and removing components (10) in a production plant (2) according to one of the preceding claims, **characterized by** the steps:
- providing at least one component (10) on a provision platform (5, 6) by means of a component provision device (1);
- preferably detecting the at least one component (10) on the provision platform (5, 6) by means of a sensor device (23);
- removing the at least one component (10) from the provision platform (5, 6) by means of the handling device (25), in particular a gripper device.

13. The method according to claim 12, **characterized in that** the feed devices (3, 4) can each be actuated intermittently, wherein while one feed device stands still, the other one is actuated and vice versa, and wherein while a component is removed from one provision platform, a component is provided on the other provision platform in parallel.

14. The method according to claim 12 or 13, **characterized in that** the conveyor drive (15, 16) of the feed device (3, 4) stands still during the removal of the at least one component (10) from the provision platform (5, 6) assigned to it and optionally during the detection of the at least one component (10) on the provision platform (5, 6) assigned to it.

15. The method according to one of claims 12 to 14, in which the component provision device (1) comprises a first feed device (3) for feeding components (10) to a provision platform (4), which is assigned to the first feed device (3), and a second feed device (4) for feeding components (10) to a provision platform (6), which is assigned to the second feed device (4), **characterized by** the steps:
a) by means of the first feed device (3): conveying at least one component (10) onto the provision platform (5), which is assigned to the first feed device (3);
b) detecting the at least one component (10) on the provision platform (5), which is assigned to the first feed device (3), by means of a sensor device (23), in particular with respect to its length and/or orientation;
c) removing the at least one component (10) from the provision platform (5), which is assigned to the first feed device (3), by means of the handling device (25);
d) by means of the second feed device (4): conveying at least one component (10) onto the provision platform (6), which is assigned to the second feed device (4);
e) detecting the at least one component (10) on the provision platform (6), which is assigned to the second feed device (4), by means of a sensor device (23), in particular with respect to its length and/or orientation;
f) removing the at least one component (10) from the provision platform (6), which is assigned to the second feed device (4), by means of the handling device (25);
wherein the sequence of steps a) to c) temporally overlaps with the sequence of steps d) to f), and wherein preferably steps a) to f) are repeated.

16. The method according to claim 15, **characterized in that** steps a) to c) and steps d) to f) relate to the same type of components (10) and/or that the conveyor drive of the first feed device (3) stands still during steps b) and c) and the conveyor drive of the second feed device (4) stands still during steps e) and f) and/or that the feed device(s) (3, 4) is/are controlled such that during a feed operation only one component (10) arrives on the provision platform (5, 6) assigned to the respective feed device (3, 4).

17. The method according to one of claims 12 to 16, **characterized in that** the provision platform(s) (5, 6) is/are designed to be translucent and the components (10) are detected on the provision platform (5, 6) from below by means of an optical sensor device (23) and/or that the handling device (25) is controlled by the controller (24) depending on at least one sensor device (23), which detects components on the provision platform (5, 6).

18. The method according to one of claims 12 to 17, **characterized in that** the return device (8, 9) comprises an upwards conveyor device (12), which is controlled depending on at least one component sensor device (17), which detects the conveyed components (10) in the feed device (3, 4), and/or that excess components (10) and/or components (10), which are not oriented in the position required for the removal on the provision platform (5, 6), are brought into the return device (8, 9) by actuation of the feed device (3, 4), in particular by actuation of the vibratory conveyor drive (15, 16).

## Revendications

1. Installation de fabrication de sous-ensembles (30) constitués de différents composants (10), comprenant :
- un dispositif de commande (24) et
- au moins un dispositif de mise à disposition de composants (1), qui comprend un premier dispositif d'introduction (3) pour l'introduction de composants (10) sur une plate-forme de mise à disposition (5), qui correspond au premier dispositif d'introduction (3),
**caractérisé en ce que** le dispositif de mise à disposition de composants (1) comprend un deuxième dispositif d'introduction (4) pour l'introduction de composants (10) sur une plate-forme de mise à disposition (6) qui correspond au deuxième dispositif d'introduction (4), les dispositifs d'introduction (3, 4) comprenant globalement le même dispositif de convoyage et les plate-formes de mise à disposition (5, 6) se trouvent l'une à côté de l'autre et **en ce que** les dispositifs d'introduction (3, 4) comprennent chacun un convoyeur vibrant avec une piste (13, 14) globalement droite et un entraînement de convoyeur vibrant (15, 16) couplé avec la piste, les pistes (13, 14) des dispositifs d'introduction (3, 4) s'étendant l'une à côté de l'autre, et **en ce que** les dispositifs d'introduction (3, 4) comprennent chacun un dispositif de retour (8, 9) qui part de la zone de la plate-forme de mise à disposition (5, 6) respective et débouche dans le dispositif d'introduction (3, 4) correspondant, de préférence au niveau de sa partie initiale, et **en ce que** les dispositifs d'introduction (3, 4) peuvent être actionnés par intermittence,
et **en ce que** l'installation de fabrication comprend au moins un dispositif de manipulation (25), plus particulièrement un dispositif de préhension, pour le retrait des composants (10) hors des plate-formes de mise à disposition (5, 6), les plate-formes de mise à disposition (5, 6) du dispositif de mise à disposition (1) pouvant être approchées par le même dispositif de manipulation (25).

2. Installation de fabrication selon la revendication 1, **caractérisée en ce que**, au niveau de la plate-forme de mise à disposition (5, 6), un trop-plein (7) est réalisé, qui débouche dans le dispositif de retour (8, 9) et/ou **en ce que** le dispositif de retour (8, 9) comprend une section de chute (20) qui commence au niveau de la plate-forme de mise à disposition (5, 6) et/ou **en ce que** les pistes (3, 4) des dispositifs d'introduction sont disposées entre les dispositifs de retour (8, 9).

3. Installation de fabrication selon la revendication 1 ou 2, **caractérisée en ce que** le dispositif d'introduction (3, 4) et/ou le dispositif de retour (8, 9) comprend un dispositif de convoyage vers le haut (11, 12) pour le convoyage des composants (10) d'un niveau bas à un niveau plus haut, de préférence le dispositif de convoyage vers le haut (11, 12) comprend une vis d'Archimède ou un convoyeur vibrant avec un trajet de convoyage s'étendant en spirale vers le haut.

4. Installation de fabrication selon l'une des revendications précédentes, **caractérisée en ce que** la piste (13, 14) du dispositif d'introduction (3, 4) comprend des chicanes, plus particulièrement des cavités, des bossages ou des obstacles auxquels les composants (10) sont exposés pendant le processus d'introduction.

5. Installation de fabrication selon l'une des revendications précédentes, **caractérisée en ce que**, le long du dispositif d'introduction (3, 4), est disposé au moins un dispositif de capteur de composant (17), plus particulièrement une barrière photoélectrique, pour la détection des composants (10) convoyés.

6. Installation de fabrication selon l'une des revendications précédentes, **caractérisée en ce que** le dispositif de retour (8, 9) comprend une piste (18, 19) s'étendant globalement en ligne droite, qui est couplée de préférence avec le même entraînement de convoyeur vibrant (15, 16) que la piste (13, 14) du dispositif d'introduction (3, 4), de préférence la piste (18, 19) du dispositif de retour (8, 9) étant inclinée plus fortement que la piste (13, 14) du dispositif d'introduction (3, 4).

7. Installation de fabrication selon l'une des revendications précédentes, **caractérisée en ce que** le dispositif d'introduction (3, 4) comprend un réservoir intermédiaire de composants (21) et le dispositif de retour (8, 9) débouche dans le réservoir intermédiaire de composants (21), de préférence un dispositif de convoyage vers le haut (11) du dispositif d'introduction (3, 4) partant du réservoir intermédiaire de composants (21).

8. Installation de fabrication selon l'une des revendications précédentes, **caractérisée en ce que** la plate-forme de mise à disposition (5, 6) est réalisée dans la partie d'extrémité de la piste (13, 14) du dispositif d'introduction (3, 4) et/ou **en ce que** la plate-forme de mise à disposition (5, 6) est une partie du dispositif d'introduction (3, 4), de préférence est intégrée dans la piste (13, 14) du dispositif d'introduction (3, 4).

9. Installation de fabrication selon l'une des revendications précédentes, **caractérisée en ce que** la plate-forme de mise à disposition (5, 6) est réalisée de manière au moins partiellement transparente et le dispositif de mise à disposition de composants (1) comprend un dispositif de capteur optique (23), plus particulièrement une caméra, qui est disposée en dessous de la plate-forme de mise à disposition (5, 6), ce qui permet de détecter, par en dessous, les composants (10) se trouvant sur la plate-forme de mise à disposition (5, 6), à l'aide du dispositif de capteur (23).

10. Installation de fabrication selon l'une des revendications précédentes, **caractérisée en ce que** le dispositif de mise à disposition de composants (1) est conçu comme un module d'insertion pour une installation de fabrication (2) structurée de manière modulaire, de préférence le module d'insertion présentant une forme allongée et la plate-forme de mise à disposition (5, 6) étant disposée au niveau de l'extrémité avant du module et un réservoir de composants (22) étant disposé au niveau de l'extrémité arrière du module.

11. Installation de fabrication selon l'une des revendications précédentes, **caractérisée en ce que** le dispositif de manipulation (25) comprend au moins deux sous-unités (26, 27), une sous-unité (26) correspond à la plate-forme de mise à disposition (5) du premier dispositif d'introduction (3) et l'autre sous-unité (27) correspond à la plate-forme de mise à disposition (6) du deuxième dispositif d'introduction (4), de préférence les sous-unités (26, 27) du dispositif de manipulation (25) pouvant être actionnées indépendamment entre elles.

12. Procédé de mise à disposition et de retrait de composants (10) dans une installation de fabrication (2) selon l'une des revendications précédentes, **caractérisé par** les étapes suivantes :
- mise à disposition d'au moins un composant (10) sur une plate-forme de mise à disposition (5, 6) au moyen du dispositif de mise à disposition de composants (1) ;
- de préférence détection de l'au moins un composant (10) sur la plate-forme de mise à disposition (5, 6) au moyen d'un dispositif de capteur (23) ;
- retrait de l'au moins un composant (10) de la plate-forme de mise à disposition (5, 6) au moyen du dispositif de manipulation (25), plus particulièrement d'un dispositif de préhension.

13. Procédé selon la revendication 12, **caractérisé en ce que** les dispositifs d'introduction (3, 4) sont actionnés chacun de manière intermittente, moyennant quoi, pendant qu'un dispositif d'introduction reste immobile, l'autre est actionné et inversement et moyennant quoi, pendant qu'un composant est retiré d'une plate-forme de mise à disposition, un composant est mis à disposition en parallèle sur l'autre plate-forme de mise à disposition.

14. Procédé selon la revendication 12 ou 13, **caractérisé en ce que** l'entraînement du convoyeur (15, 16) du dispositif d'introduction (3, 4) reste immobile pendant le retrait de l'au moins un composant (10) de la plate-forme de mise à disposition (5, 6) correspondante et le cas échéant pendant la détection de l'au moins un composant (10) sur la plate-forme de mise à disposition (5, 6) correspondante.

15. Procédé selon l'une des revendications 12 à 14, dans lequel le dispositif de mise à disposition de composants (1) comprend un premier dispositif d'introduction (3) pour l'introduction de composants (10) sur une plate-forme de mise à disposition (4), qui correspond au premier dispositif d'introduction (3), et un deuxième dispositif d'introduction (4) pour l'introduction de composants (10) sur une plate-forme de mise à disposition (6), qui correspond au deuxième dispositif d'introduction (4), **caractérisé par** les étapes suivantes :
a) au moyen du premier dispositif d'introduction (3) : convoyage d'au moins un composant (10) vers la plate-forme de mise à disposition (5) qui correspond au premier dispositif d'introduction (3) ;
b) détection de l'au moins un composant (10) sur la plate-forme de mise à disposition (5) qui correspond au premier dispositif d'introduction (3), au moyen d'un dispositif de capteur (23), plus particulièrement en ce qui concerne sa position et/ou son orientation ;
c) retrait de l'au moins un composant (10) de la plate-forme de mise à disposition (5) qui correspond au premier dispositif d'introduction (3), au moyen du dispositif de manipulation (25) ;
d) au moyen du deuxième dispositif d'introduction (4) : convoyage d'au moins un composant (10) vers la plate-forme de mise à disposition (6) qui correspond au deuxième dispositif d'introduction (4) ;
e) détection de l'au moins un composant (10) sur la plate-forme de mise à disposition (6) qui correspond au deuxième dispositif d'introduction (4), au moyen d'un dispositif de capteur (23), plus particulièrement en ce qui concerne sa position et/ou son orientation ;
f) retrait de l'au moins un composant (10) de la plate-forme de mise à disposition (6) qui correspond au deuxième dispositif d'introduction (4), au moyen du dispositif de manipulation (25) ;
la séquence des étapes a) à c) se superposant dans le temps avec la séquence des étapes d) à f) et de préférence les étapes a) à f) étant répétées.

16. Procédé selon la revendication 15, **caractérisé en ce que** les étapes a) à c) et les étapes d) à f) concernent le même type de composants (10) et/ou **en ce que** l'entraînement de convoyeur du premier dispositif d'introduction (3) reste immobile pendant les étapes b) et c) et l'entraînement de convoyeur du deuxième dispositif d'introduction (4) reste immobile pendant les étapes e) et f) et/ou **en ce que** le(s) dispositif(s) d'introduction (3, 4) est/sont contrôlé(s) de façon à ce que, pendant un processus d'introduction, un seul composant (10) arrive sur la plate-forme de mise à disposition (5, 6) correspondant au dispositif d'introduction (3, 4) respectif.

17. Procédé selon l'une des revendications 12 à 16, **caractérisé en ce que** la ou les plate-forme(s) de mise à disposition (5, 6) est/sont réalisées de manière transparente et les composants (10) sont détectés par en dessous sur la plate-forme de mise à disposition (5, 6) au moyen d'un dispositif de capteur optique (23) et/ou **en ce que** le dispositif de manipulation (25) est contrôlé par le dispositif de commande (24) en fonction d'au moins un dispositif de capteur (23) qui détecte les composants sur la plate-forme de mise à disposition (5, 6).

18. Procédé selon l'une des revendications 12 à 17, **caractérisé en ce que** le dispositif de retour (8, 9) comprend un dispositif de convoyage vers le haut (12) qui est contrôlé en fonction d'au moins un dispositif de capteur de composants (17) qui détecte les composants (10) convoyés dans le dispositif d'introduction (3, 4) et/ou **en ce que** les composants (10) en excès et/ou les composants (10) qui ne sont pas orientés sur la plate-forme de mise à disposition (5, 6), dans la position nécessaire pour le retrait, sont amenés, par l'actionnement du dispositif d'introduction (3, 4), plus particulièrement par l'actionnement de l'entraînement du convoyeur vibrant (15, 16), vers le dispositif de retour (8, 9).
